# EUROPÄISCHE PATENTSCHRIFT

(11) **EP 2 600 113 B1**
(45) Veröffentlichungstag und Bekanntmachung des Hinweises auf die Patenterteilung: **10.01.2018**
(21) Anmeldenummer: 11191203.6
(22) Anmeldetag: 29.11.2011
(51) Int. Cl.: G01D 5/34, G01C 1/00, G01B 11/26, G01B 11/27, G01C 15/00

(54) **Verfahren und Vorrichtung zur Messung des Drehwinkels zweier relativ zueinander rotierender Objekte**
Method and device for measuring the angle of rotation of two objects rotating relative to each other
Procédé et dispositif de mesure de l'angle de rotation de deux objets tournant l'un par rapport à l'autre

(43) Veröffentlichungstag der Anmeldung: 05.06.2013
(73) Patentinhaber: SICK STEGMANN GmbH, 78166 Donaueschingen (DE)
(72) Erfinder: Mutschler, Reinhold, 78056 Villingen-Schwenningen (DE)
(74) Vertreter: Westphal, Mussgnug & Partner Patentanwälte mbB

(56) Entgegenhaltungen:
- DE-A1-102005 031 966
- GB-A- 1 498 409

## Beschreibung

Die Erfindung betrifft ein Verfahren zur Messung des Drehwinkels zweier relativ zueinander rotierender Objekte gemäß dem Oberbegriff der Patentansprüche 1, 2 und 3 sowie eine Vorrichtung zur Messung des Drehwinkels zweier relativ zueinander rotierender Objekte gemäß dem Oberbegriff der Patentansprüche 12, 13 und 14.

Für viele Anwendungen ist es von grundlegender Bedeutung, den Drehwinkel eines rotierenden Objektes zu messen. Im Allgemeinen wird dabei der Drehwinkel des rotierenden Objektes relativ zu einem feststehenden, mit einem Maßstab behafteten Objekt gemessen. Beispielsweise kann es sich bei dem rotierenden Objekt um die rotierende Welle eines Motors handeln, welche sich relativ zu einem feststehenden Maschinenteil dreht. Der Maßstab kann dabei sowohl inkrementell als auch absolut sein. Dabei ist es wünschenswert, eine möglichst toleranzunempfindliche Messung der relativen Drehbewegung durchführen zu können, welche jedoch eine hohe Genauigkeit aufweist. Im Idealfall erfolgt die Messung berührungslos, um mechanischen Verschleiß zu vermeiden.

Die EP 2 187 178 A1 offenbart ein Messprinzip unter Ausnutzung der optischen Polarisation von Licht. Zur Messung des Drehwinkels zweier gegeneinander rotierender Objekte sendet ein Sender linear polarisiertes Licht aus. Das Licht tritt durch einen Polarisationsfilter hindurch, der sich gegenüber dem Sender in Abhängigkeit vom Drehwinkel dreht. Die Intensität des durch den Polarisationsfilter durchtretenden Lichts wird durch einen Empfänger gemessen und als drehwinkelabhängiges Signal ausgewertet.

Die europäische Patentanmeldung 11 003 980.7 offenbart eine Vorrichtung zur Messung des Drehwinkels zweier relativ zueinander rotierender Objekte, mit einem dem einen Objekt zugeordneten Sender, mit einem polarisationsrichtungsbeeinflussenden Element, wobei sich der Sender und das polarisationsrichtungsbeeinflussende Element in Abhängigkeit vom Drehwinkel relativ zueinander drehen, und mit einem Empfänger, der die durch das polarisationsrichtungsbeeinflussende Element durchtretende Lichtintensität misst, um ein drehwinkelabhängiges Signal zu erzeugen, wobei der Empfänger wenigstens zwei Gruppen mit jeweils wenigstens zwei Empfangselementen aufweist, wobei jedes Empfangselement polarisationsempfindlich detektierend ausgebildet ist, wobei die Polarisationsebenen der Empfangselemente in jeder Gruppe jeweils gegeneinander verdreht sind. Die Verwendung von zwei oder mehreren Empfangselementen in einer Gruppe verbessert die Genauigkeit der Messung des Drehwinkels, da eine Mittelung über die verschiedenen optischen Kanäle erfolgen kann. Die Verwendung von wenigstens zwei Gruppen von Empfangselementen, welche insbesondere gleichartig ausgebildet sind, führt zu mehrfachen Kanälen, mittels welcher die Auflösung durch statistische Mittelung zusätzlich verbessert werden kann.

Als weiterer Stand der Technik werden die DE 10 2005 031 966 A1 und GB 1 498 409 A genannt.

Die bekannten Vorrichtungen zur Messung des Drehwinkels zweier relativ zueinander rotierender Objekte sind derart ausgebildet, dass der Sender, das polarisationsrichtungsbeeinflussende Element und der Empfänger in der Regel nicht von einem Gehäuse umschlossen sind, das gegen Verschmutzung oder Beschädigung schützt, sodass der optische Pfad zumindest teilweise offen ist.

Um Sicherheitsstandards für eine sichere Positionsbestimmung zu erfüllen, sind besondere Vorkehrungen notwendig, um eine Verschmutzung oder eine Beschädigung der Vorrichtung, insbesondere des polarisationsrichtungsbeeinflussenden Elements und/oder der Empfangselemente, zu erkennen.

Die Aufgabe der Erfindung besteht daher darin, eine verbesserte Vorrichtung zur Messung des Drehwinkels zweier relativ zueinander rotierender Objekte sowie ein verbessertes Verfahren zur Messung des Drehwinkels zweier relativ zueinander rotierender Objekte bereit zu stellen, welche insbesondere Anforderungen von Sicherheitsstandards für eine sichere Positionsbestimmung erfüllen und insbesondere eine Verschmutzung oder Beschädigung der Vorrichtung, insbesondere des Empfängers und/oder des polarisationsrichtungsbeeinflussenden Element, feststellen können.

Die Aufgabe wird erfindungsgemäß gelöst durch ein Verfahren mit den Merkmalen des Patentanspruchs 1 sowie eine Vorrichtung mit den Merkmalen des Patentanspruchs 10.

Vorteilhafte Ausgestaltungen und Weiterbildungen der Erfindung sind in den abhängigen Ansprüchen angegeben.

Das erfindungsgemäße Verfahren zur Messung des Drehwinkels zweier relativ zueinander rotierender Objekte, mit einem dem einen Objekt zugeordneten Sender, mit einem polarisationsrichtungsbeeinflussenden Element, wobei sich der Sender und das polarisationsrichtungsbeeinflussende Element in Abhängigkeit vom Drehwinkel relativ zueinander drehen, und wobei die von einem Empfänger durch das polarisationsrichtungsbeeinflussende Element durchtretende oder reflektierte gemessene Lichtintensität als drehwinkelabhängiges Signal ausgewertet wird, wobei der Empfänger wenigstens zwei Gruppen mit jeweils wenigstens zwei Empfangselementen aufweist, wobei jedes Empfangselement polarisationsempfindlich detektierend ausgebildet ist, wobei die Polarisationsebenen der Empfangselemente in jeder Gruppe jeweils gegeneinander verdreht sind, zeichnet sich dadurch aus, dass die Empfangssignale wenigstens zwei der Empfangselemente in einem Überwachungsmodus unabhängig voneinander ausgewertet werden.

Durch die unabhängige Auswertung der Empfangssignale der Empfangselemente, insbesondere der Empfangselemente, welche gleiche Polarisationsrichtungen aufweisen, werden redundante Pfade bereitgestellt, welche eine Verwendung bei Sicherheitsanwendungen zulassen. Weiterhin ermöglicht die unabhängige Auswertung der Empfangssignale der Empfangselemente eine Überwachung auf Verschmutzungen und Beschädigungen, da ein Vergleich der entsprechenden Empfangssignale bei Verschmutzungen oder Beschädigungen zu einer Abweichung der Signale voneinander führt, während die Empfangssignale der Empfangselemente, welche keine Verschmutzungen oder Beschädigungen aufweisen und gleiche Polarisationsebenen aufweisen, identisch sein müssten. Ohne zusätzliche Komponenten ist daher auf einfache Art und Weise eine Überwachung auf Verschmutzung oder Beschädigung und zudem ein Einsatz der entsprechend verbesserten Vorrichtung in Sicherheitsanwendungen möglich.

Gemäß einer ersten Ausführungsform der Erfindung werden die Empfangssignale wenigstens zwei der Empfangselemente, welche gleiche Polarisationsebenen aufweisen, in dem Überwachungsmodus miteinander verglichen, um auf diese Art und Weise eine Überwachung auf Verschmutzungen oder Beschädigungen zu ermöglichen.

Gemäß einer zweiten Ausführungsform der Erfindung werden die Empfangssignale von wenigstens zwei der Empfangselemente in dem Überwachungsmodus in einem Winkel umgerechnet und der berechnete Winkel mit dem Winkel verglichen, der aus den Empfangssignalen wenigstens zwei anderer Empfangselemente, die den gleichen relativen Winkelversatz der Polarisationsebenen zueinander aufweisen, berechnet wurde.

Gemäß einer dritten Ausführungsform der Erfindung wird in dem Überwachungsmodus der Kontrast eines einzelnen Empfangselementes oder der Kontrast einer oder mehrerer Gruppen von Empfangselementen bestimmt und dieser entweder mit einem hinterlegten Sollkontrast eines einzelnen Empfangselementes oder einer oder mehrerer Gruppen von Empfangselementen verglichen. Als Kontrast wird dabei das Verhältnis der Maximalamplituden von s-polarisiertem Licht und p-polarisiertem Licht bezeichnet. Jedes einzelne Empfangselement weist einen Sollkontrast auf, welcher hinterlegt sein kann. Bei Abweichungen des Kontrasts von einem hinterlegten Sollkontrast kann auf eine Verschmutzung oder Beschädigung geschlossen werden.

Gemäß einer bevorzugten Ausführungsform der Erfindung werden die Empfangssignale von wenigstens zwei der Empfangselemente, welche beide in einer der Gruppen angeordnet sind, in dem Überwachungsmodus in einen Winkel umgerechnet und der berechnete Winkel mit dem Winkel verglichen, der aus den Empfangssignalen wenigstens zwei anderer Empfangselemente, welche beide in einer anderen Gruppe angeordnet sind und die den gleichen relativen Winkelversatz der Polarisationsebenen zueinander aufweisen, berechnet wurde.

Vorzugsweise wird in dem Fall, dass bei dem Vergleich eine Abweichung festgestellt wird, die Abweichung mit einem hinterlegten Toleranzwert verglichen. Der Toleranzwert beschreibt den zulässigen Verschmutzungsgrad und dessen Auswirkung auf Genauigkeit.

Gemäß einer bevorzugten Ausführungsform wird bei Überschreiten des Toleranzwerts eine Warnmeldung ausgegeben, beispielsweise in Form eines optischen oder akustischen oder elektrischen Signals, das von einer übergeordneten Steuerung ausgewertet werden kann, um auf die mögliche Verschmutzung oder Beschädigung hinzuweisen und eine Überwachung der Vorrichtung zu ermöglichen.

Vorzugsweise werden auch die in dem Überwachungsmodus bestimmten Kontraste in einem Speicher hinterlegt, um ggf. die Entwicklung des Kontrastes über die Benutzungsdauer in der Vorrichtung nachverfolgen zu können.

Vorzugsweise wird der Überwachungsmodus bei Einschalten der Vorrichtung oder in regelmäßigen Zeitabständen aktiviert, um die Vorrichtung regelmäßig auf Verschmutzungen oder Beschädigungen überwachen zu können. Gemäß einer besonders bevorzugten Ausführungsform der Erfindung ist der Überwachungsmodus dauerhaft parallel zum regulären Messmodus aktiv, um redundante Signalpfade für Sicherheitsanwendungen bereit zu stellen.

Vorzugsweise werden die Empfangssignale von wenigstens zwei der Empfangselemente in zwei oder mehreren verschiedenen relativen Positionen der beiden Objekte unabhängig voneinander ausgewertet, um auf diese Art und Weise eine winkel- bzw. bewegungsabhängige Veränderung von einer statischen Veränderung der Signale einzelner Empfangselemente unterscheiden zu können, was die Unterscheidung einer örtlichen Verschmutzung der Empfangselemente von einer örtlichen Verschmutzung des polarisationsrichtungsbeeinflussenden Elements ermöglicht.

Gemäß einer bevorzugten Ausführungsform der Erfindung werden die Empfangssignale der Empfangselemente in einem Messmodus gemeinsam verstärkt und ausgewertet und insbesondere gemittelt, um auf diese Weise die Genauigkeit der Messung des Drehwinkels verbessern zu können. Bei dieser Auswertung ist insbesondere der Winkelversatz der Polarisationsebenen zu berücksichtigen, sofern die Empfangselemente nicht gleiche Polarisationsebenen aufweisen.

Vorteilhafterweise können einzelne Empfangselemente oder Gruppen von Empfangselementen abgeschaltet werden, was insbesondere dann von Vorteil ist, wenn eine Verschmutzung oder Beschädigung eines einzelnen Empfangselementes oder einer Gruppe von Empfangselementen ermittelt wurde und so durch Abschalten der betroffenen Empfangselemente die Toleranz gegenüber Verschmutzungen erhöht werden kann.

Gemäß einer bevorzugten Weiterbildung der Erfindung ist vorgesehen, dass der Überwachungsmodus über eine Schnittstelle durch eine übergeordnete Steuerung oder durch eine in den Empfänger integrierte Steuerung, insbesondere eine Ablaufsteuerung, aktiviert werden kann.

Die erfindungsgemäße Vorrichtung zur Messung des Drehwinkels zweier relativ zueinander rotierender Objekte, mit einem dem einen Objekt zugeordneten Sender, mit einem polarisationsrichtungsbeeinflussenden Element, wobei sich der Sender und das polarisationsrichtungsbeeinflussende Element in Abhängigkeit vom Drehwinkel relativ zueinander drehen, und mit einem Empfänger, der die durch das polarisationsrichtungsbeeinflussende Element durchtretende oder reflektierte Lichtintensität misst, um ein drehwinkelabhängiges Signal zu erzeugen, wobei der Empfänger wenigstens zwei Gruppen mit jeweils wenigstens zwei Empfangselementen aufweist, wobei jedes Empfangselement polarisationsempfindlich detektierend ausgebildet ist, wobei die Polarisationsebenen der Empfangselemente in jeder Gruppe jeweils gegeneinander verdreht sind, zeichnet sich dadurch aus, dass die Empfangssignale von wenigstens zwei der Empfangselemente zumindest in einem Überwachungsmodus unabhängig voneinander auswertbar sind. Dies ermöglicht das Bereitstellen von redundanten Signalpfaden für Sicherheitsanwendungen und zusätzlich die Überwachung der Vorrichtung auf Verschmutzungen und Beschädigungen.

Gemäß einer ersten Ausführungsform der Erfindung sind die Empfangssignale wenigstens zwei der Empfangselemente, welche gleiche Polarisationsebenen aufweisen, in dem Überwachungsmodus miteinander vergleichbar. Gemäß einer zweiten Ausführungsform der Erfindung sind die Empfangssignale wenigstens zwei der Empfangselemente in einem Überwachungsmodus unabhängig voneinander auswertbar, wobei die Empfangssignale wenigstens zwei der Empfangselemente in dem Überwachungsmodus in einen Winkel umrechenbar sind und der berechnete Winkel mit dem Winkel vergleichbar ist, der aus den Empfangssignalen wenigstens zwei anderer Empfangselementen, die den gleichen relativen Winkelversatz der Polarisationsebenen aufweisen, berechenbar ist.

Gemäß einer dritten Ausführungsform der Erfindung ist in dem Überwachungsmodus der Kontrast eines einzelnen Empfangselements oder der Kontrast einer oder mehrerer Gruppen von Empfangselementen bestimmbar und dieser ist entweder mit einem hinterlegten Soll-Kontrast eines einzelnen Empfangselements oder einer oder mehrerer Gruppen von Empfangselementen vergleichbar oder dieser ist mit dem Kontrast eines anderen einzelnen Empfangselements oder dem Kontrast einer anderen oder mehrerer anderer Gruppen von Empfangselementen vergleichbar.

Vorzugsweise sind die verschiedenen Gruppen von Empfangselementen räumlich voneinander getrennt ausgebildet, sodass diese sich möglichst kaum gegenseitig beeinflussen und dadurch die entsprechenden Sicherheitsanforderungen für eine sichere Positionsbestimmung erfüllen.

Gemäß einer vorteilhaften Ausführungsform der Erfindung sind die Polarisationsebenen der Empfangselemente in jeder Gruppe jeweils um 180°/n gegeneinander verdreht, wobei n die Anzahl der Empfangselemente in der entsprechenden Gruppe ist, was einen besonders einfachen Aufbau der Vorrichtung ermöglicht.

Gemäß einer vorteilhaften Ausführungsform der Erfindung sendet der Sender gepulstes Licht aus oder ist mit einer Modulationsfrequenz beaufschlagbar, um auf diese Weise zu ermöglichen, Hintergrundlicht zu unterdrücken und gleichzeitig für Sicherheitsanwendungen eine Funktionsüberprüfung der Signalpfade zu ermöglichen.

Vorteilhafterweise weist die Vorrichtung eine Ausgabeeinheit auf, welche ein optisches, elektrisches oder sonstiges Warnsignal ausgeben kann, um auf diese Weise auf die mögliche Verschmutzung, Beschädigung oder Fehlfunktion hinzuweisen und eine Überwachung der Vorrichtung zu ermöglichen.

Ein Ausführungsbeispiel der Erfindung wird anhand der nachfolgenden Figuren ausführlich erläutert. Es zeigt
- Fig. 1: eine schematische Darstellung des Strahlenganges einer Vorrichtung zur Messung des Drehwinkels zweier relativ zueinander rotierender Objekte,
- Fig. 2: eine schematische Darstellung des Empfängers der Vorrichtung gemäß Figur 1,
- Fig. 3: den Empfänger gemäß Figur 2 mit einem verschmutzten Empfangselement,
- Fig. 4a: eine Gruppe von Empfangselementen des Empfängers gemäß Figur 2 mit einem verschmutzten Empfangselement,
- Fig. 4b: die Lichtintensitäten, welche mit einem verschmutzten und einem nicht verschmutzten Empfangselement der Gruppe von Empfangselementen gemäß Figur 4a detektiert werden,
- Fig. 4c: die Lichtintensitäten, welche mit zwei nicht verschmutzten Empfangselementen der Gruppe von Empfangselementen gemäß Figur 4a detektiert werden und
- Fig. 5: die Winkeldifferenz zum Sollwinkel bei Auswertung der Lichtintensitäten von einem verschmutzten Empfangselement und einem nicht verschmutzten Empfangselement der Gruppe von Empfangselementen gemäß Figur 4a.

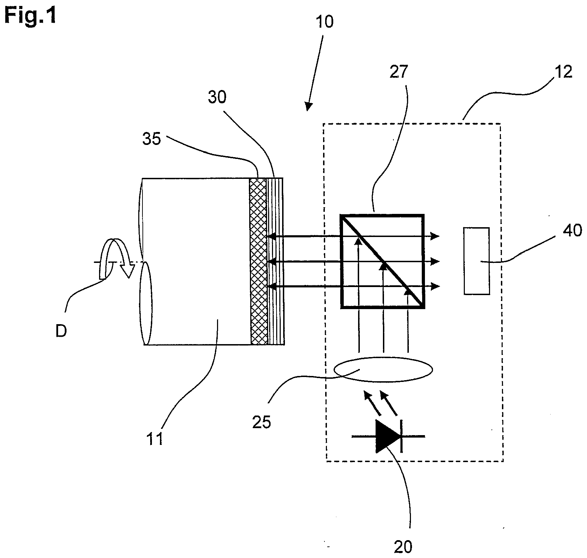

Figur 1 zeigt schematisch eine Vorrichtung 10 zur Messung des Drehwinkels zweier relativ zueinander rotierender Objekte 11, 12. Dabei ist vorliegend lediglich ein Objekt 11 um eine Drehachse D rotierend, bspw. als Welle eines Motors, ausgebildet, wobei der Drehwinkel der Welle in Bezug zu einem feststehenden Objekt 12, bspw. dem Motorgehäuse oder einem feststehenden Maschinenteil, ermittelt werden soll. Die Vorrichtung 10 weist einen Sender 20 auf, welcher bspw. als unpolarisierte Lichtquelle, bspw. als LED, ausgebildet ist. Das von dem Sender 20 abgestrahlte Licht wird mit Hilfe einer Linse 25 kollimiert. Da in der dargestellten Ausführungsform der Sender 20 senkrecht zur Drehachse D des Objektes 11 abstrahlt, wird das von dem Sender 20 ausgesandte Licht mittels eines Strahlteilers 27 in den Strahlengang eingekoppelt und fällt auf die Stirnfläche der sich drehenden Welle 11. An der Stirnfläche des sich drehenden Objektes 11 ist ein polarisationsrichtungsbeeinflussendes Element 30 angeordnet, welches beispielsweise als Verzögerungsplatte oder als Polarisator, welcher insbesondere als reflektierender Polarisator ausgebildet ist, ausgebildet sein kann. Dies kann bspw. durch einen hinter dem Polarisator angeordneten Reflektor 35, bspw. einen Spiegel, erreicht werden. Bei Verwendung einer Verzögerungsplatte als polarisationsrichtungsbeeinflussendes Element 30 wird das Licht des Senders 20 durch einen weiteren Polarisator polarisiert oder es wird bereits ein Sender 20 verwendet, welcher polarisiertes Licht ausstrahlt.

Das reflektierte Licht fällt durch den Strahlteiler 27 auf einen Empfänger 40. Sowohl der Sender 20 als auch der Empfänger 40 sind feststehend an dem Objekt 12 angeordnet. Selbstverständlich kann die Position von dem Sender 20 und dem Empfänger 40 vertauscht werden.

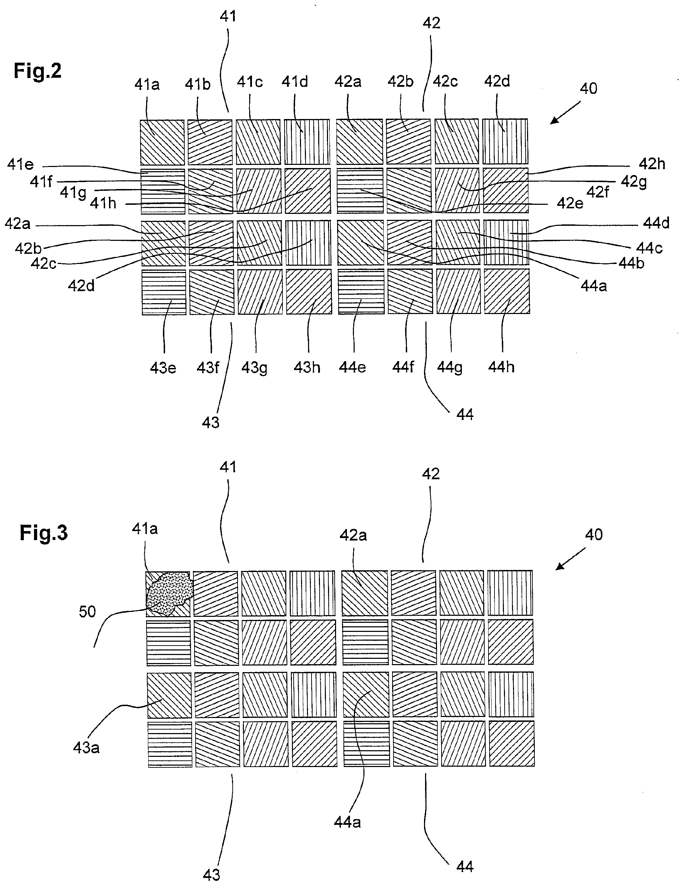

Figur 2 zeigt schematisch den Aufbau des Empfängers 40, welcher vier Gruppen 41, 42, 43, 44 mit jeweils acht Empfangselementen 41a, 41b, 41c, 41d, 41e, 41f, 41g, 41h, 42a, 42b, 42c, 42d, 42e, 42f, 42g, 42h, 43a, 43b, 43c, 43d, 43e, 43f, 43g, 43h, 44a, 44b, 44c, 44d, 44e, 44f, 44g, 44h aufweist. Die acht Empfangselemente 41a-41h, 42a-42h, 43a-43h, 44a-44h einer Gruppe 41, 42, 43, 44 sind polarisationsempfindlich detektierend ausgebildet, wozu bspw. vor jedem der Empfangselemente 41a-44h ein Polarisationsfilter angeordnet ist. Die Polarisationsebenen der Empfangselemente 41a-44h jeder Gruppe 41, 42, 43, 44 sind jeweils gegeneinander verdreht, vorzugsweise um 180°/n, wobei n die Anzahl der Empfangselemente in jeder Gruppe ist. Bei vorliegend beispielsweise acht Empfangselementen sind die Polarisationsebenen der Empfangselemente somit um 22,5° gegeneinander verdreht. Selbstverständlich sind zwei, vier oder mehr Empfangselemente pro Gruppe möglich.

Die Gruppen 41, 42, 43, 44 sind gleichartig aufgebaut, sodass in jeder der Gruppen 41, 42, 43, 44 jeweils ein Empfangselement, bspw. 41a, mit zu jeweils einem Empfangselement, bspw. 42a, 43a, 44a, der anderen Gruppen 42, 43, 44 identischer Polarisationsebene angeordnet ist. Durch die Verwendung von vorliegend acht Empfangselementen 41a-41h, 42a-42h, 43a-43h, 44a-44h je Gruppe 41, 42, 43, 44 werden insgesamt acht verschiedene optische Kanäle gebildet, welche durch die Verwendung von vier gleichartigen Gruppen 41, 42, 43, 44 insgesamt vier Mal vorhanden sind.

Bei der Auswertung der Signale der einzelnen Empfangselemente 41a-41h, 42a-42h, 43a-43h, 44a-44h wird vorzugsweise über die acht verschiedenen optischen Kanäle der Winkel berechnet. Durch die Unterteilung in n Polarisationsebenen ergeben sich bei n=8 acht um jeweils 22,5° phasenverschobene Signale, die bei geeigneter Auswertung erlauben, die Genauigkeit der Winkelbestimmung zu erhöhen. Eine Mittelung der Signale der Empfangselemente mit gleicher Polarisationsebene, bspw. 41a, 42a, 43a, 44a, oder der daraus berechneten Winkel, ist zur Verbesserung der Auflösung ebenfalls möglich.

Erfindungsgemäß ist jedoch eine unabhängige Auswertung wenigstens zwei der Empfangselemente 41a, 42a, 43a, 44a; 41b, 42b, 43b, 44b; 41c, 42c, 43c, 44c; 41d, 42d, 43d, 44d; 41e, 42e, 43e, 44e; 41f, 42f, 43f, 44f; 41g, 42g, 43g, 44g; 41h, 42h, 43h, 44h, beispielsweise zwei der Empfangselemente mit gleicher Polarisationsebene oder zwei der Empfangselemente mit einem definierten Winkelversatz der Polarisationsebenen zueinander, vorgesehen, vorzugsweise eine unabhängige Auswertung sämtlicher der Empfangselemente 41a, 42a, 43a, 44a; 41b, 42b, 43b, 44b; 41c, 42c, 43c, 44c; 41d, 42d, 43d, 44d; 41e, 42e, 43e, 44e; 41f, 42f, 43f, 44f; 41g, 42g, 43g, 44g; 41h, 42h, 43h, 44h, um für jeden der acht optischen Kanäle vier voneinander unabhängige Signalpfade bereit zu stellen, welche eine Verwendung der Vorrichtung 10 in Sicherheitsanwendungen, welche redundante Signalauswertungen erfordern, ermöglichen.

Die unabhängige Auswertung der Empfangssignale der Empfangselemente 41-44h ermöglicht zudem die Erkennung von Verschmutzungen oder Beschädigungen.

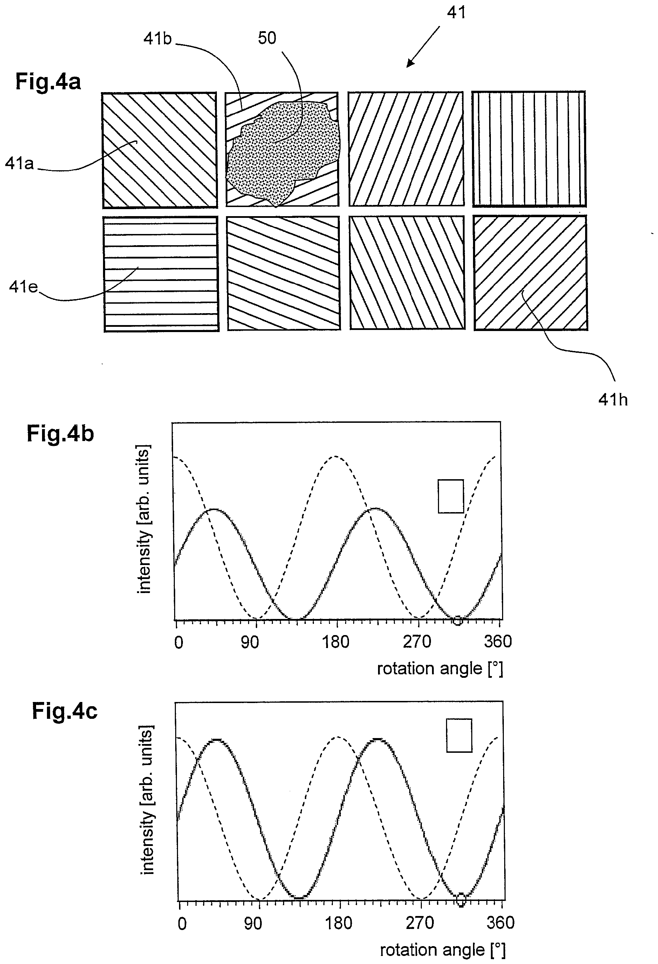

Wie in Figur 3 dargestellt, ist das Empfangselement 41a der Gruppe 41 von Empfangselementen des Empfängers 40 mit einem Schmutzpartikel 50 verschmutzt. Bei unabhängiger Auswertung der Signale der Empfangselemente 41a, 42a, 43a, 44a, welche jeweils gleiche Polarisationsebenen aufweisen, und Vergleich dieser Signale, lässt sich feststellen, dass die Signalintensität des Empfangselementes 41a geringer ist als die Signalintensitäten der Empfangselemente 42a, 43a, 44a, welche jeweils zueinander im Wesentlichen identisch sind, sodass auf eine Verschmutzung oder Beschädigung des Empfangselementes 41a geschlossen werden kann. Falls eine derartige Verschmutzung oder Beschädigung erkannt wird, wird vorzugsweise eine entsprechende Fehlermeldung an eine entsprechende Ausgabeeinheit ausgegeben. Gemäß einer Ausführungsform der Erfindung ist es möglich, das Empfangselement 41a so lange vollständig abzuschalten, bis die Verschmutzung oder Beschädigung beseitigt ist. In einer alternativen Ausführungsform kann auch die gesamte Gruppe 41 von Empfangselementen vollständig abgeschaltet werden. Da geringfügige Schwankungen zwischen den Signalintensitäten grundsätzlich möglich sein können oder eine geringe Verschmutzung die Winkelmessung noch nicht beeinträchtigt, ist vorzugsweise ein Toleranzwert hinterlegt, mit welchem die Abweichung zwischen der Signalintensität des Empfangselementes 41a und den Signalintensitäten der Empfangselemente 42a, 43a, 44a verglichen wird, wobei nur bei Überschreiten des hinterlegten Toleranzwertes eine entsprechende Fehlermeldung ausgegeben wird. Wie in Figur 4 dargestellt, kann ein Schmutzpartikel 50 nicht nur anhand des Vergleichs von Empfangselementen mit gleicher Polarisationsebene, sondern auch anhand des Vergleichs von Signalen von Empfangselementen mit unterschiedlicher Polarisationsebene ermittelt werden. Figur 4a zeigt die Gruppe 41 von acht Empfangselementen 41a-h, bei welchen das Empfangselement 41b verschmutzt ist. Figur 4b zeigt die Lichtintensitäten von zwei Empfangselementen 41a, 41b, bei welchen sowohl ein Amplitudenfehler als auch ein Offset-Fehler durch den Schmutzpartikel 50 hervorgerufen wird. Figur 4c zeigt zum Vergleich die erwarteten Signalamplituden der Empfangselemente 41a, 41b ohne den Schmutzpartikel 50. Die Polarisationsebenen der beiden Empfangselemente 41a, 41b unterscheiden sich dabei um 22,5°, was zu dem definierten Winkeloffset zwischen den beiden Signalamplitudenverläufen führt. Werden auch die Empfangselemente 41a-41h innerhalb einer Gruppe 41 unabhängig voneinander ausgewertet, kann die Zahl der für eine Verschmutzungsüberwachung erforderlichen Gruppen verringert werden und die Kosten der Vorrichtung 10 reduziert werden.

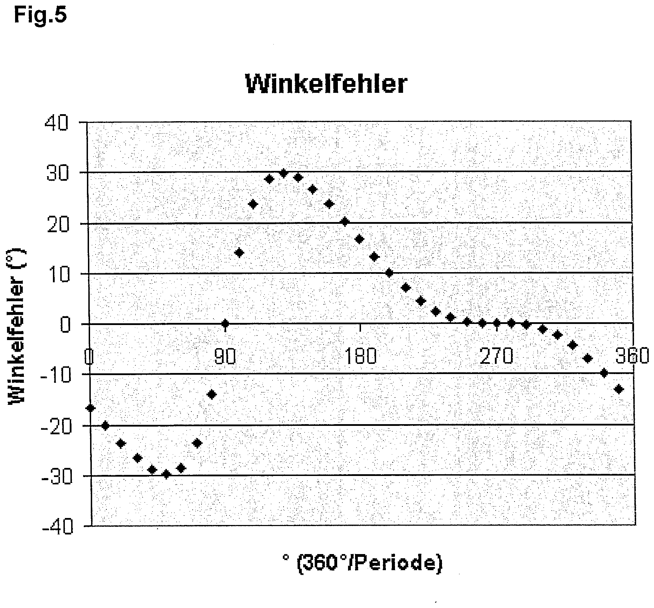

Weiterhin ist es möglich, nicht nur die von den Empfangselementen 41a-44h detektierten Signale zu vergleichen, sondern auch die von den Empfangselementen 41a-44h detektierten Signale in einen Winkel umzurechnen und die berechneten Winkel miteinander zu vergleichen. Die Darstellung des Winkelfehlers bei einem verschmutzten Empfangselement 41b, wie in Figur 4a dargestellt, zeigt Figur 5.

Alternativ kann zur Überwachung der Vorrichtung 10 auf Verschmutzungen oder Beschädigungen der Empfangselemente 41a-44h auch der Kontrast eines einzelnen Empfangselementes 41a-44h bestimmt werden und mit einem hinterlegten Sollkontrast des Empfangselementes 41a-44h verglichen werden. Dabei ist als Kontrast das Verhältnis der maximalen Signalamplituden zwischen s-polarisiertem Licht und p-polarisiertem Licht zu verstehen. Zur Verbesserung der Überwachung kann auch der Kontrast einer oder mehrerer Gruppen 41, 42, 43, 44 von Empfangselementen bestimmt werden und mit dem Sollkontrast einer oder mehrerer Gruppen 41, 42, 43, 44 von Empfangselementen verglichen werden. Statt den Kontrast des einzelnen Empfangselementes 41a-44h oder einer oder mehrerer Gruppen 41, 42, 43, 44 von Empfangselementen 41a-44h mit Sollkontrasten zu vergleichen, kann auch ein Vergleich der ermittelten Kontraste untereinander erfolgen, um auf Verschmutzungen oder Beschädigungen schließen zu können. Weiterhin kann bei der Auswertung zwischen dem Kontrast einzelner Empfangselemente 41a-44h und dem Kontrast einer oder mehrerer Gruppen 41, 42, 43, 44 von Empfangselementen unterschieden werden, um Verschmutzungen oder Beschädigungen einzelner Empfangselemente 41a-44h von großflächigeren Verschmutzungen oder Beschädigungen einer oder mehrerer Gruppen 41, 42, 43, 44 oder des gesamten Empfängers 40 unterscheiden zu können. Sowohl die Sollkontraste als auch die während der Überprüfung bestimmten Kontraste können in einem Speicher hinterlegt werden, um nicht nur einen Vergleich mit dem Sollkontrast zu ermöglichen, sondern auch die zeitlichen Entwicklungen des Kontrastes während des Betriebes der Vorrichtung 10 nachverfolgen zu können.

Um nicht nur eine Verschmutzung der Empfangselemente 41a-44h des Empfängers 40, sondern auch eine Verschmutzung des polarisationsrichtungsbeeinflussenden Elements 30 erkennen zu können, können in einer Ausführungsform die Empfangssignale der Empfangselemente, welche gleiche Polarisationsebenen aufweisen, unabhängig voneinander in zwei oder mehreren verschiedenen relativen Positionen der beiden Objekte 11, 12 ausgewertet werden, sodass eine Verschmutzung oder Beschädigung der Empfangselemente des Empfängers 40, welche bei Relativdrehung zwischen den Objekten 11, 12 jeweils in dem betroffenen Empfangselement festgestellt wird, von einer Verschmutzung des polarisationsrichtungsbeeinflussenden Elements 30, welche bei Relativdrehung zwischen den Objekten 11, 12 auf unterschiedlichen Empfangselementen des Empfängers 40 detektiert wird, unterscheiden zu können.

Die Überprüfung oder Überwachung auf Verschmutzungen und Beschädigungen erfolgt vorzugsweise in einem Überwachungsmodus, in welchem die Empfangselemente 41a-44h des Empfängers 40 unabhängig voneinander ausgewertet werden können, wobei der Überwachungsmodus vorzugsweise bei Einschalten der Vorrichtung 10 und/oder in regelmäßigen zeitlichen Abständen aktiviert wird. Im Messmodus können in einer Ausführungsform Empfangselemente mit gleichen Polarisationsebenen wahlweise gemeinsam verstärkt und ausgewertet werden, um über eine größere Fläche zu integrieren und so gegen Verschmutzung unempfindlich zu werden und insbesondere die Anzahl der zur Auswertung erforderlichen Signalpfade zu minimieren. Alternativ kann auch in dem Messmodus eine unabhängige Auswertung der einzelnen Empfangselemente entweder nur der Empfangselemente mit gleicher Polarisationsebene oder sämtlicher Empfangselemente des Empfängers 40 erfolgen.

Der Überwachungsmodus kann über eine Schnittstelle durch eine übergeordnete Steuerung oder durch eine in den Empfänger 40 integrierte Steuerung aktiviert werden.

Die Vorrichtung 10 weist in einer Ausführungsform einen Speicher, insbesondere einen nicht flüchtigen Speicher, wie bspw. ein EEPROM, auf, in welchem Toleranzwerte und/oder Sollkontraste und/oder während des Betriebes ermittelte Abweichungen, Kontraste oder sonstige Messwerte oder errechnete Werte abgelegt werden können. Weiterhin kann die Vorrichtung 10 eine nicht dargestellte Ausgabeeinheit aufweisen, an welche eine Fehlermeldung ausgegeben wird, beispielsweise in Form eines optischen oder elektrischen Signals, um auf die Fehlfunktion, welche durch Beschädigung oder Verschmutzung hervorgerufen wird, aufmerksam zu machen und eine Überwachung der Vorrichtung 10 zu ermöglichen.

Der Sender 20 kann in einer Ausführungsform gepulstes Licht aussenden oder frequenzmoduliert betrieben werden, um Hintergrundlicht zu unterdrücken und gleichzeitig für Sicherheitsanwendungen eine Funktionsüberprüfung der verschiedenen Signalpfade zu ermöglichen.

### Bezugszeichenliste

- 10: Vorrichtung
- 11: Objekt (Welle)
- 12: Objekt (Maschinenteil)

- 20: Sender
- 25: Linse
- 27: Strahlteiler

- 30: polarisationsrichtungsbeeinflussendes Element
- 35: Reflektor

- 40: Empfänger
- 41: Gruppe
- 41a: Empfangselement
- 41b: Empfangselement
- 41c: Empfangselement
- 41d: Empfangselement
- 41e: Empfangselement
- 41f: Empfangselement
- 41g: Empfangselement
- 41h: Empfangselement
- 42: Gruppe
- 42a: Empfangselement
- 42b: Empfangselement
- 42c: Empfangselement
- 42d: Empfangselement
- 42e: Empfangselement
- 42f: Empfangselement
- 42g: Empfangselement
- 42h: Empfangselement
- 43: Gruppe
- 43a: Empfangselement
- 43b: Empfangselement
- 43c: Empfangselement
- 43d: Empfangselement
- 43e: Empfangselement
- 43f: Empfangselement
- 43g: Empfangselement
- 43h: Empfangselement
- 44: Gruppe
- 44a: Empfangselement
- 44b: Empfangselement
- 44c: Empfangselement
- 44d: Empfangselement
- 44e: Empfangselement
- 44f: Empfangselement
- 44g: Empfangselement
- 44h: Empfangselement

- 50: Schmutzpartikel

- D: Drehachse

## Patentansprüche

1. Verfahren zur Messung des Drehwinkels zweier relativ zueinander rotierender Objekte (11, 12), mit einem dem einen Objekt (11) zugeordneten Sender (20), mit einem polarisationsrichtungsbeeinflussenden Element (30), wobei sich der Sender und das polarisationsrichtungsbeeinflussende Element (30) in Abhängigkeit vom Drehwinkel relativ zueinander drehen, und wobei die durch das polarisationsrichtungsbeeinflussende Element (30) durchtretende oder reflektierte, von einem Empfänger (40) gemessene Lichtintensität als drehwinkelabhängiges Signal ausgewertet wird, **dadurch gekennzeichnet, dass** der Empfänger (40) wenigstens zwei räumlich voneinander getrennte, gleichartig aufgebaute Gruppen (41, 42, 43, 44) mit jeweils wenigstens zwei Empfangselementen (41a, 41b, 41c, 41d, 41e, 41f, 41g, 41h, 42a, 42b, 42c, 42d, 42e, 42f, 42g, 42h, 43a, 43b, 43c, 43d, 43e, 43f, 43g, 43h, 44a, 44b, 44c, 44d, 44e, 44f, 44g, 44h) aufweist, wobei jedes Empfangselement (41a-44h) polarisationsempfindlich detektierend ausgebildet ist, wobei die Polarisationsebenen der Empfangselemente (41a-44h) in jeder Gruppe (41, 42, 43, 44) jeweils gegeneinander verdreht sind, und wobei die Empfangssignale wenigstens zwei der Empfangselemente (41a, 42a, 43a, 44a; 41b, 42b, 43b, 44b; 41c, 42c, 43c, 44c; 41d, 42d, 43d, 44d; 41e, 42e, 43e, 44e; 41f, 42f, 43f, 44f; 41g, 42g, 43g, 44g; 41h, 42h, 43h, 44h) in einem Überwachungsmodus unabhängig voneinander ausgewertet werden, wobei die Empfangssignale wenigstens zwei der Empfangselemente (41a-44h), welche gleiche Polarisationsebenen aufweisen, in dem Überwachungsmodus miteinander verglichen werden.

2. Verfahren zur Messung des Drehwinkels zweier relativ zueinander rotierender Objekte (11, 12), mit einem dem einen Objekt (11) zugeordneten Sender (20), mit einem polarisationsrichtungsbeeinflussenden Element (30), wobei sich der Sender und das polarisationsrichtungsbeeinflussende Element (30) in Abhängigkeit vom Drehwinkel relativ zueinander drehen, und wobei die durch das polarisationsrichtungsbeeinflussende Element (30) durchtretende oder reflektierte, von einem Empfänger (40) gemessene Lichtintensität als drehwinkelabhängiges Signal ausgewertet wird, **dadurch gekennzeichnet, dass** der Empfänger (40) wenigstens zwei räumlich voneinander getrennte, gleichartig aufgebaute Gruppen (41, 42, 43, 44) mit jeweils wenigstens zwei Empfangselementen (41a, 41b, 41c, 41d, 41e, 41f, 41g, 41h, 42a, 42b, 42c, 42d, 42e, 42f, 42g, 42h, 43a, 43b, 43c, 43d, 43e, 43f, 43g, 43h, 44a, 44b, 44c, 44d, 44e, 44f, 44g, 44h) aufweist, wobei jedes Empfangselement (41a-44h) polarisationsempfindlich detektierend ausgebildet ist, wobei die Polarisationsebenen der Empfangselemente (41a-44h) in jeder Gruppe (41, 42, 43, 44) jeweils gegeneinander verdreht sind, und wobei die Empfangssignale wenigstens zwei der Empfangselemente (41a, 42a, 43a, 44a; 41b, 42b, 43b, 44b; 41c, 42c, 43c, 44c; 41d, 42d, 43d, 44d; 41e, 42e, 43e, 44e; 41f, 42f, 43f, 44f; 41g, 42g, 43g, 44g; 41h, 42h, 43h, 44h) in einem Überwachungsmodus unabhängig voneinander ausgewertet werden, wobei die Empfangssignale wenigstens zwei der Empfangselemente (41a-44h) in dem Überwachungsmodus in einen Winkel umgerechnet werden und der berechnete Winkel mit dem Winkel verglichen wird, der aus den Empfangssignalen wenigstens zwei anderer Empfangselemente, die den gleichen relativen Winkelversatz der Polarisationsebenen aufweisen, berechnet wurde.

3. Verfahren zur Messung des Drehwinkels zweier relativ zueinander rotierender Objekte (11, 12), mit einem dem einen Objekt (11) zugeordneten Sender (20, mit einem polarisationsrichtungsbeeinflussenden Element (30), wobei sich der Sender und das polarisationsrichtungsbeeinflussende Element (30) in Abhängigkeit vom Drehwinkel relativ zueinander drehen, und wobei die durch das polarisationsrichtungsbeeinflussende Element (30) durchtretende oder reflektierte, von einem Empfänger (40) gemessene Lichtintensität als drehwinkelabhängiges Signal ausgewertet wird, **dadurch gekennzeichnet, dass** der Empfänger (40) wenigstens zwei räumlich voneinander getrennte, gleichartig aufgebaute Gruppen (41, 42, 43, 44) mit jeweils wenigstens zwei Empfangselementen (41a, 41b, 41c, 41d, 41e, 41f, 41g, 41h, 42a, 42b, 42c, 42d, 42e, 42f, 42g, 42h, 43a, 43b, 43c, 43d, 43e, 43f, 43g, 43h, 44a, 44b, 44c, 44d, 44e, 44f, 44g, 44h) aufweist, wobei jedes Empfangselement (41a-44h) polarisationsempfindlich detektierend ausgebildet ist, wobei die Polarisationsebenen der Empfangselemente (41a-44h) in jeder Gruppe (41, 42, 43, 44) jeweils gegeneinander verdreht sind, und wobei die Empfangssignale wenigstens zwei der Empfangselemente (41a, 42a, 43a, 44a; 41b, 42b, 43b, 44b; 41c, 42c, 43c, 44c; 41d, 42d, 43d, 44d; 41e, 42e, 43e, 44e; 41f, 42f, 43f, 44f; 41g, 42g, 43g, 44g; 41h, 42h, 43h, 44h) in einem Überwachungsmodus unabhängig voneinander ausgewertet werden, wobei in dem Überwachungsmodus der Kontrast eines einzelnen Empfangselements (41a-44h) oder der Kontrast einer oder mehrerer Gruppen (41, 42, 43, 44) von Empfangselementen bestimmt wird und dieser entweder mit einem hinterlegten Soll-Kontrast eines einzelnen Empfangselements (41a-44h) oder einer oder mehrerer Gruppen (41, 42, 43, 44) von Empfangselementen verglichen wird oder dieser mit dem Kontrast eines anderen einzelnen Empfangselements (41a-44h) oder dem Kontrast einer anderen oder mehrerer anderer Gruppen (41, 42, 43, 44) von Empfangselementen verglichen wird.

4. Verfahren nach Anspruch 2 **dadurch gekennzeichnet, dass** die Empfangssignale wenigstens zwei der Empfangselemente (41a-41h), welche in einer der Gruppen (41) angeordnet sind, in dem Überwachungsmodus in einen Winkel umgerechnet werden und der berechnete Winkel mit dem Winkel verglichen wird, der aus den Empfangssignalen wenigstens zwei anderer Empfangselementen (42a-42h), welche in einer anderen Gruppe (42) angeordnet sind und die den gleichen Winkelversatz der Polarisationsebenen zueinander aufweisen, berechnet wurde.

5. Verfahren nach einem der Ansprüche 1 bis 3, **dadurch gekennzeichnet, dass** in dem Fall, dass bei dem Vergleich eine Abweichung festgestellt wird, die Abweichung mit einem hinterlegten Toleranzwert verglichen wird.

6. Verfahren nach Anspruch 5,
**dadurch gekennzeichnet, dass** bei Überschreiten des Toleranzwerts eine Warnmeldung ausgegeben wird.

7. Verfahren nach Anspruch 3, **dadurch gekennzeichnet, dass** die in dem Überwachungsmodus bestimmten Kontraste in einem Speicher hinterlegt werden.

8. Verfahren nach einem der vorhergehenden Ansprüche,
**dadurch gekennzeichnet, dass** die Empfangssignale von wenigstens zwei der Empfangselemente (41a-44h), in wenigstens zwei verschiedenen relativen Positionen der beiden Objekte (11, 12) unabhängig voneinander ausgewertet werden.

9. Verfahren nach einem der vorhergehenden Ansprüche,
**dadurch gekennzeichnet, dass** die Empfangssignale der Empfangselemente (41a-44h) in einem Messmodus gemeinsam verstärkt und ausgewertet und insbesondere gemittelt werden.

10. Verfahren nach einem der vorhergehenden Ansprüche,
**dadurch gekennzeichnet, dass** einzelne Empfangselemente (41a-44h) oder Gruppen von Empfangselementen (41, 42, 43, 44) abgeschaltet werden können.

11. Verfahren nach einem der vorhergehenden Ansprüche,
**dadurch gekennzeichnet, dass** der Überwachungsmodus über eine Schnittstelle durch eine übergeordnete Steuerung oder durch eine in den Empfänger (40) integrierte Steuerung aktiviert werden kann.

12. Vorrichtung zur Messung des Drehwinkels zweier relativ zueinander rotierender Objekte (11, 12), mit einem dem einen Objekt zugeordneten Sender (20), mit einem polarisationsrichtungsbeeinflussenden Element (30), wobei sich der Sender (20) und das polarisationsrichtungsbeeinflussende Element (30) in Abhängigkeit vom Drehwinkel relativ zueinander drehen, und mit einem Empfänger (40), der die durch das polarisationsrichtungsbeeinflussende Element (30) durchtretende oder reflektierte Lichtintensität misst, um ein drehwinkelabhängiges Signal zu erzeugen,
**dadurch gekennzeichnet, dass** der Empfänger (40) wenigstens zwei räumlich voneinander getrennte, gleichartig aufgebaute Gruppen (41, 42, 43, 44) mit jeweils wenigstens zwei Empfangselementen (41a-44h) aufweist, wobei jedes Empfangselement (41a-44h) polarisationsempfindlich detektierend ausgebildet ist, wobei die Polarisationsebenen der Empfangselemente (41a-44h) in jeder Gruppe (41, 42, 43, 44) jeweils gegeneinander verdreht sind, wobei Mittel vorgesehen sind, die Empfangssignale wenigstens zwei der Empfangselemente (41a-44h) in einem Überwachungsmodus unabhängig voneinander auszuwerten, wobei Mittel vorgesehen sind, die Empfangs-signale wenigstens zwei der Empfangselemente (41a-44h), welche gleiche Polarisationsebenen aufweisen, in dem Überwachungsmodus miteinander zu vergleichen.

13. Vorrichtung zur Messung des Drehwinkels zweier relativ zueinander rotierender Objekte (11, 12), mit einem dem einen Objekt zugeordneten Sender (20), mit einem polarisationsrichtungsbeeinflussenden Element (30), wobei sich der Sender (20) und das polarisationsrichtungsbeeinflussende Element (30) in Abhängigkeit vom Drehwinkel relativ zueinander drehen, und mit einem Empfänger (40), der die durch das polarisationsrichtungsbeeinflussende Element (30) durchtretende oder reflektierte Lichtintensität misst, um ein drehwinkelabhängiges Signal zu erzeugen,
**dadurch gekennzeichnet, dass** der Empfänger (40) wenigstens zwei räumlich voneinander getrennte, gleichartig aufgebaute Gruppen (41, 42, 43, 44) mit jeweils wenigstens zwei Empfangselementen (41a-44h) aufweist, wobei jedes Empfangselement (41a-44h) polarisationsempfindlich detektierend ausgebildet ist, wobei die Polarisationsebenen der Empfangselemente (41a-44h) in jeder Gruppe (41, 42, 43, 44) jeweils gegeneinander verdreht sind, wobei die Empfangssignale wenigstens zwei der Empfangselemente (41a-44h) in einem Überwachungsmodus unabhängig voneinander auswertbar sind, wobei Mittel vorgesehen sind, die Empfangssignale wenigstens zwei der Empfangselemente (41a-44h) in dem Überwachungsmodus in einen Winkel umzurechnen und die berechneten Winkel mit dem Winkel zu ergleichen, der aus den Empfangssignalen wenigstens zwei anderer Empfangselemente, die den gleichen relativen Winkelversatz der Polarisationsebenen aufweisen, berechenbar ist.

14. Vorrichtung zur Messung des Drehwinkels zweier relativ zueinander rotierender Objekte (11, 12), mit einem dem einen Objekt zugeordneten Sender (20), mit einem polarisationsrichtungsbeeinflussenden Element (30), wobei sich der Sender (20) und das polarisationsrichtungsbeeinflussende Element (30) in Abhängigkeit vom Drehwinkel relativ zueinander drehen, und mit einem Empfänger (40), der die durch das polarisationsrichtungsbeeinflussende Element (30) durchtretende oder reflektierte Lichtintensität misst, um ein drehwinkelabhängiges Signal zu erzeugen,
**dadurch gekennzeichnet, dass** der Empfänger (40) wenigstens zwei räumlich voneinander getrennte, gleichartig aufgebaute Gruppen (41, 42, 43, 44) mit jeweils wenigstens zwei Empfangselementen (41a-44h) aufweist, wobei jedes Empfangselement (41a-44h) polarisationsempfindlich detektierend ausgebildet ist, wobei die Polarisationsebenen der Empfangselemente (41a-44h) in jeder Gruppe (41, 42, 43, 44) jeweils gegeneinander verdreht sind, wobei Mittel vorgesehen sind, die Empfangssignale wenigstens zwei der Empfangselemente (41a-44h) in einem Überwachungsmodus unabhängig voneinander auszuwerten, wobei Mittel vorgesehen sind, mit welchen in dem Überwachungsmodus der Kontrast eines einzelnen Empfangselements (41a-44h) oder der Kontrast einer oder mehrerer Gruppen (41, 42, 43, 44) von Empfangselementen bestimmbar ist und dieser entweder mit einem hinterlegten Soll-Kontrast eines einzelnen Empfangselements (41a-44h) oder einer oder mehrerer Gruppen (41, 42, 43, 44) von Empfangselementen vergleichbar ist oder dieser mit dem Kontrast eines anderen einzelnen Empfangselements (41a-44h) oder dem Kontrast einer anderen oder mehrerer anderer Gruppen (41, 42, 43, 44) von Empfangselementen vergleichbar ist.

15. Vorrichtung nach Anspruch 12, 13 oder 14,
**dadurch gekennzeichnet, dass** die Polarisationsebenen der Empfangselemente (41a-44h) in jeder Gruppe (41, 42, 43, 44) jeweils um 180°/n gegeneinander verdreht sind, wobei n die Zahl der Empfangselemente in der entsprechenden Gruppe ist.

16. Vorrichtung nach einem der Ansprüche 12 bis 15,
**dadurch gekennzeichnet, dass** der Sender (20) gepulstes Licht aussendet oder mit einer Modulationsfrequenz beaufschlagbar ist.

17. Vorrichtung nach einem der Ansprüche 12 bis 16,
**dadurch gekennzeichnet, dass** die Vorrichtung eine Ausgabeeinheit aufweist, welche ein optisches oder akustisches oder sonstiges Warnsignal ausgeben kann.

## Claims

1. Method for measuring the angle of rotation of two objects (11, 12) rotating relative to one another, comprising a transmitter (20) which is assigned to one of the objects (11) and an element (30) which influences the direction of polarisation, wherein the transmitter and the element (30) which influences the direction of polarisation rotate relative to one another as a function of the angle of rotation, and wherein the light intensity passing through or reflected by the element (30) influencing the direction of polarisation and measured by a receiver is evaluated as a signal dependent on the angle of rotation, **characterised in that** the receiver (40) has at least two groups (41, 42, 43, 44) which are spatially separated from one another and are of identical construction, each having at least two receiver elements (41a, 41b, 41c, 41d, 41e, 41f, 41g, 41h, 42a, 42b, 42c, 42d, 42e, 42f, 42g, 42h, 43a, 43b, 43c, 43d, 43e, 43f, 43g, 43h, 44a, 44b, 44c, 44d, 44e, 44f, 44g, 44h), wherein each receiver element (41a-44h) is designed as a detector which is sensitive to polarisation, wherein the polarisation planes of the receiver elements (41a-44h) in each group (41, 42, 43, 44) are rotated with respect to one another, wherein the receive signals of at least two of the receiver elements (41a, 42a, 43a, 44a; 41b, 42b, 43b, 44b; 41c, 42c, 43c, 44c; 41d, 42d, 43d, 44d; 41e, 42e, 43e, 44e; 41f, 42f, 43f, 44f; 41g, 42g, 43g, 44g; 41h, 42h, 43h, 44h) are evaluated independently of one another in a monitoring mode, wherein the receive signals of at least two of the receiver elements (41a-44h) having the same polarisation planes can be compared with one another in the monitoring mode.

2. Method for measuring the angle of rotation of two objects (11, 12) rotating relative to one another, comprising a transmitter (20) which is assigned to one of the objects (11) and an element (30) which influences the direction of polarisation, wherein the transmitter and the element (30) which influences the direction of polarisation rotate relative to one another as a function of the angle of rotation, and wherein the light intensity passing through or reflected by the element (30) influencing the direction of polarisation and measured by a receiver (40) is evaluated as a signal dependent on the angle of rotation, **characterised in that** the receiver (40) has at least two groups (41, 42, 43, 44) which are spatially separated from one another and are of identical construction, each having at least two receiver elements ((41a, 42a, 43a, 44a; 41b, 42b, 43b, 44b; 41c, 42c, 43c, 44c; 41d, 42d, 43d, 44d; 41e, 42e, 43e, 44e; 41f, 42f, 43f, 44f; 41g, 42g, 43g, 44g; 41h, 42h, 43h, 44h), wherein each receiver element (41a-44 h) is designed as a detector which is sensitive to polarisation, wherein the polarisation planes of the receiver elements (41a-44h) in each group (41, 42, 43, 44) are rotated with respect to one another, wherein the receive signals of at least two of the receiver elements (41a, 42a, 43a, 44a; 41b, 42b, 43b, 44b; 41c, 42c, 43c, 44c; 41d, 42d, 43d, 44d; 41e, 42e, 43e, 44e; 41f, 42f, 43f, 44f; 41g, 42g, 43g, 44g; 41h, 42h, 43h, 44h) are evaluated independently of one another in a monitoring mode, wherein in the monitoring mode the receive signals of at least two of the receiver elements (41a-44h) are converted into an angle and the calculated angle is compared with the angle calculated from the receive signals of at least two other receiver elements which have the same relative angular offset of the polarisation planes.

3. Method for measuring the angle of rotation of two objects (11, 12) rotating relative to one another, comprising a transmitter (20) which is assigned to one of the objects (11) and an element (30) which influences the direction of polarisation, wherein the transmitter and the element (30) which influences the direction of polarisation rotate relative to one another as a function of the angle of rotation, and wherein the light intensity passing through or reflected by the element (30) influencing the direction of polarisation and measured by a receiver (40) is evaluated as a signal dependent on the angle of rotation, **characterised in that** the receiver (40) has at least two groups (41, 42, 43, 44) which are spatially separated from one another and are of identical construction, each having at least two receiver elements (41a, 41b, 41c, 41d, 41e, 41f, 41g, 41h, 42a, 42b, 42c, 42d, 42e, 42f, 42g, 42h, 43a, 43b, 43c, 43d, 43e, 43f, 43g, 43h, 44a, 44b, 44c, 44d, 44e, 44f, 44g, 44h), wherein each receiver element (41a-44 h) is designed as a detector which is sensitive to polarisation, wherein the polarisation planes of the receiver elements (41a-44h) in each group (41, 42, 43, 44) are rotated with respect to one another, wherein the receive signals of at least two of the receiver elements (41a, 42a, 43a, 44a; 41b, 42b, 43b, 44b; 41c, 42c, 43c, 44c; 41d, 42d, 43d, 44d; 41e, 42e, 43e, 44e; 41f, 42f, 43f, 44f; 41g, 42g, 43g, 44g; 41h, 42h, 43h, 44h) are evaluated independently of one another in a monitoring mode, wherein in the monitoring mode the contrast of a single receiver element (41a-44h) or the contrast of one or more groups (41, 42, 43, 44) of receiver elements is determined, and this contrast is either compared with a stored desired contrast of a single receiver element (41a-44h) or one or more groups (41, 42, 43, 44) of receiver elements, or this contrast is compared with the contrast of another individual receiver element (41a-44h) or to the contrast of another group or a plurality of other groups (41, 42, 43, 44) of receiver elements.

4. Method according to claim 2, **characterised in that** in the monitoring mode the receive signals of at least two of the receiver elements (41a-41h) which are arranged in one of the groups (41) are converted into an angle, and the calculated angle is compared with the angle calculated from the receive signals of at least two other receiver elements (42a-42h) which are positioned in one of the other groups (42) and which have the same angular offset of the polarisation planes with respect to one another.

5. Method according to one of claims 1 to 3, **characterised in that** if a discrepancy is found during the comparison the discrepancy is compared with a stored tolerance value.

6. Method according to claim 5, **characterised in that** a warning message is issued when the tolerance value is exceeded.

7. Method according to claim 3, **characterised in that** the contrasts determined in the monitoring mode are stored in a memory.

8. Method according to one of the preceding claims, **characterised in that** the receive signals of at least two of the receiver elements (41a-44h) are evaluated independently of one another for at least two different relative positions of the two objects (11, 12).

9. Method according to one of the preceding claims, **characterised in that** in a measuring mode the receive signals of the receiver elements (41a-44h) are jointly amplified and evaluated and in particular averaged.

10. Method according to one of the preceding claims, **characterised in that** individual receiver elements (41a-44h) or groups of receiver elements (41, 42, 43, 44) can be switched off.

11. Method according to one of the preceding claims, **characterised in that** the monitoring mode can be activated via an interface by a superordinate controller or by a controller integrated into the receiver (40).

12. Device for measuring the angle of rotation of two objects (11, 12) rotating relative to one another, comprising a transmitter (20) which is assigned to one of the objects and an element (30) which influences the direction of polarisation, wherein the transmitter (20) and the element (30) which influences the direction of polarisation rotate relative to one another as a function of the angle of rotation, and comprising a receiver (40) which measures the light intensity passing through or reflected by the element (30) influencing the direction of polarisation in order to generate a signal dependent on the angle of rotation, **characterised in that** the receiver (40) has at least two groups (41, 42, 43, 44) which are spatially separated from one another and are of identical construction, each having at least two receiver elements (41a-44h), wherein each receiver element (41a-44h) is designed as a detector which is sensitive to polarisation, wherein the polarisation planes of the receiver elements (41a-44h) in each group (41, 42, 43, 44) are rotated with respect to one another, wherein means are provided by which the receive signals of at least two of the receiver elements (41a-44h) can be evaluated independently of one another, wherein means are provided by which the receive signals of at least two of the receiver elements (41a-44h) having the same polarisation planes can be compared with one another in the monitoring mode.

13. Device for measuring the angle of rotation of two objects (11, 12) rotating relative to one another, comprising a transmitter (20) which is assigned to one of the objects and an element (30) which influences the direction of polarisation, wherein the transmitter (20) and the element (30) which influences the direction of polarisation rotate relative to one another as a function of the angle of rotation, and comprising a receiver (40) which measures the light intensity passing through or reflected by the element (30) influencing the direction of polarisation in order to generate a signal dependent on the angle of rotation, **characterised in that** the receiver (40) has at least two groups (41, 42, 43, 44) which are spatially separated from one another and are of identical construction, each having at least two receiver elements (41a-44h), wherein each receiver element (41a-44h) is designed as a detector which is sensitive to polarisation, wherein the polarisation planes of the receiver elements (41a-44h) in each group (41, 42, 43, 44) are rotated with respect to one another, wherein the receive signals of at least two of the receiver elements (41a-44h) can be evaluated independently of one another in a monitoring mode, wherein means are provided by which in the monitoring mode the receive signals of at least two of the receiver elements (41a-44h) are converted into an angle and the calculated angle is compared with the angle calculated from the receive signals of at least two other receiver elements which have the same relative angular offset of the polarisation planes.

14. Device for measuring the angle of rotation of two objects (11, 12) rotating relative to one another, comprising a transmitter (20) which is assigned to one of the objects and an element (30) which influences the direction of polarisation, wherein the transmitter (20) and the element (30) which influences the direction of polarisation rotate relative to one another as a function of the angle of rotation, and comprising a receiver (40) which measures the light intensity passing through or reflected by the element (30) influencing the direction of polarisation in order to generate a signal dependent on the angle of rotation, **characterised in that** the receiver (40) has at least two groups (41, 42, 43, 44) which are spatially separated from one another and are of identical construction, each having at least two receiver elements (41a-44h), wherein each receiver element (41a-44h) is designed as a detector which is sensitive to polarisation, wherein the polarisation planes of the receiver elements (41a-44h) in each group (41, 42, 43, 44) are rotated with respect to one another, wherein means are provided by which the receive signals of at least two of the receiver elements (41a-44h) can be evaluated independently, wherein in the monitoring mode means are provided by which the contrast of a single receiver element (41a-44h) or the contrast of one or more groups (41, 42, 43, 44) of receiver elements can be determined, and this contrast is either compared with a stored desired contrast of a single receiver element (41a-44h) or one or more groups (41, 42, 43, 44) of receiver elements, or this contrast can be compared with the contrast of another individual receiver element (41a-44h) or with the contrast of another group or a plurality of other groups (41, 42, 43, 44) of receiver elements.

15. Device according to claim 12, 13 or 14, **characterised in that** the polarisation planes of the receiver elements (41a-44 h) in each group (41, 42, 43, 44) are in each case rotated by 180°/n with respect to one another, where n is the number of receiver elements in the corresponding group.

16. Device according to one of claims 12 to 15, **characterised in that** the transmitter (20) emits pulsed light or can be supplied with a modulation frequency.

17. Device according to one of claims 12 to 16, **characterised in that** the device has an output unit which can emit an optical, acoustic or other warning signal.

## Revendications

1. Procédé de mesure de l'angle de rotation de deux objets (11, 12) mobiles en rotation l'un par rapport à l'autre, comprenant un émetteur (20) associé à l'un des objets (11), un élément (30) agissant sur la direction de polarisation, l'émetteur et l'élément (30) agissant sur la direction de polarisation tournant l'un par rapport à l'autre en fonction de l'angle de rotation, et l'intensité de la lumière traversant l'élément (30) agissant sur la direction de la polarisation ou réfléchie par celui-ci mesurée par un récepteur (40) étant exploitée en tant que signal dépendant de l'angle de rotation,
**caractérisé en ce que**
le récepteur (40) comporte au moins deux groupes (41, 42, 43, 44) séparés dans l'espace et réalisés de manière similaire, comprenant chacun au moins deux éléments de réception (41a, 41b, 41c, 41d, 41e, 41f, 41g, 41h, 42a, 42b, 42c, 42d, 42e, 42f, 42g, 42h, 43a, 43b, 43c, 43d, 43e, 43f, 43g, 43h, 44a, 44b, 44c, 44d, 44e, 44f, 44g, 44h), chaque élément de réception (41a-44h) étant réalisé pour permettre une détection sensible à la polarisation, les plans de polarisation des éléments de réception (41a-44h) de chaque groupe (41, 42, 43, 44) étant respectivement tournés les uns par rapport aux autres, et les signaux de réception d'au moins deux des éléments de réception (41a, 42a, 43a, 44a, 41b, 42b, 43b, 44b, 41c, 42c, 43c, 44c, 41d, 42d, 43d, 44d, 41e, 42e, 43e, 44e, 41f, 42f, 43f, 44f, 41g, 42g, 43g, 44g, 41h, 42h , 43h, 44h) étant exploités indépendamment les uns des autres dans un mode de surveillance, les signaux de réception d'au moins deux des éléments de réception (41a-44h) ayant les mêmes plans de polarisation étant comparés dans le mode de surveillance.

2. Procédé de mesure de l'angle de rotation de deux objets (11, 12) mobiles en rotation l'un par rapport à l'autre comportant un émetteur (20) associé à l'un des objets (11), et un élément (30) agissant sur la direction de polarisation, l'émetteur et l'élément (30) agissant sur la direction de polarisation tournant l'un par rapport à l'autre en fonction de l'angle de rotation, et l'intensité de la lumière traversant l'élément (30) agissant sur la direction de polarisation ou réfléchie par celui-ci mesurée par un récepteur (40) étant exploitée en tant que signal dépendant de l'angle de rotation,
**caractérisé en ce que**
le récepteur (40) comporte au moins deux groupes (41, 42, 43, 44) séparés dans l'espace et réalisés de manière similaire, comprenant chacun au moins deux éléments de réception (41a, 41b, 41c, 41d, 41e, 41f, 41g, 41h, 42a, 42b, 42c ; 42d, 42e, 42f, 42g, 42h, 43a, 43b, 43c, 43d, 43e, 43f, 43g, 43h, 44a, 44b, 44c, 44d, 44e, 44f, 44g, 44h), chaque élément de réception (41a-41h) étant réalisé de façon à permettre une détection sensible à la polarisation, les plans de polarisation des éléments de réception (41a-44h) de chaque groupe (41, 42, 43, 44) étant respectivement tournés les uns par rapport aux autres, et les signaux de réception d'au moins deux des éléments de réception (41a, 42a, 43a, 44a, 41b, 42b, 43b, 44b, 41c, 42c, 43c, 44c, 41d, 42d, 43d, 44d, 41e, 42e, 43e, 44e, 41f, 42f, 43f, 44f ; 41g, 42g, 43g, 44g, 41h, 42h, 43h, 44h) étant exploités indépendamment les uns des autres dans un mode de surveillance, les signaux de réception d'au moins deux des éléments de réception (41a-44h) étant transformés par calcul en un angle dans le mode de surveillance et l'angle calculé étant comparé à l'angle ayant été calculé à partir des signaux de réception d'au moins deux autres éléments de réception ayant le même décalage angulaire relatif des plans de polarisation.

3. Procédé de mesure de l'angle de rotation de deux objets (11, 12) mobiles en rotation l'un par rapport à l'autre comportant un émetteur (20) associé à l'un des objets (11), et un élément (30) agissant sur la direction de polarisation, l'émetteur et l'élément (30) agissant sur la direction de polarisation tournant l'un par rapport à l'autre en fonction de l'angle de rotation, et l'intensité de la lumière traversant l'élément (30) agissant sur la direction de polarisation, ou réfléchie par celui-ci mesurée par un récepteur (40) étant exploitée en tant que signal dépendant de l'angle de rotation,
**caractérisé en ce que**
le récepteur (40) comporte au moins deux groupes (41, 42, 43, 44) séparés dans l'espace et réalisés de manière similaire, comprenant chacun au moins deux éléments de réception (41a, 41b, 41c, 41d, 41e, 41f, 41g, 41h, 42a, 42b, 42c ; 42d, 42e, 42f, 42g, 42h, 43a, 43b, 43c, 43d, 43e, 43f, 43g, 43h, 44a, 44b, 44c, 44d, 44e, 44f, 44g, 44h), chaque élément de réception (41a-44h) étant réalisé pour permettre une détection sensible à la polarisation, les plans de polarisation des éléments de réception (41a-44h) de chaque groupe (41, 42, 43, 44) étant respectivement tournés les uns par rapport aux autres, et les signaux de réception d'au moins deux des éléments de réception (41a, 42a, 43a, 44a, 41b, 42b, 43b, 44b, 41c, 42c, 43c, 44c, 41d, 42d, 43d, 44d, 41e, 42e, 43e, 44e, 41f, 42f, 43f, 44f, 41g, 42g, 43g, 44g, 41h, 42h, 43h, 44h) étant exploités indépendamment les uns des autres, dans un mode de surveillance, dans le mode de surveillance, le contraste d'un élément de réception individuel (41a-44h) ou le contraste d'un ou de plusieurs groupe(s) (41, 42, 43, 44) d'éléments de réception étant déterminé, et celui-ci étant comparé soit à un contraste de consigne enregistré d'un élément de réception (41h-44h) individuel ou d'un ou de plusieurs groupe(s) (41, 42, 43, 44) d'éléments de réception, soit au contraste d'un autre élément de réception (41a-44h) individuel ou au contraste d'un autre ou de plusieurs autres groupe(s) (41, 42, 43, 44) d'éléments de réception.

4. Procédé conforme à la revendication 2,
**caractérisé en ce que**
les signaux de réception d'au moins deux des éléments de réception (41a-41h) qui sont situés dans l'un des groupes (41) sont transformés par calcul en un angle dans le mode de surveillance, et l'angle calculé est comparé à l'angle ayant été calculé à partir des signaux de réception d'au moins deux autres éléments de réception (42a-42h), situés dans un autre groupe (42) et ayant le même décalage angulaire des plans de polarisation les uns par rapport aux autres.

5. Procédé conforme à l'une des revendications 1 à 3,
**caractérisé en ce que**
dans le cas dans lequel, lors de la comparaison, un écart a été déterminé, cet écart est comparé à une valeur de tolérance enregistrée.

6. Procédé conforme à la revendication 5,
**caractérisé en ce qu'**
en cas de dépassement de la valeur de tolérance un message d'avertissement est délivrée.

7. Procédé conforme à la revendication 3,
**caractérisé en ce que**
les contrastes déterminés dans le mode de surveillance sont enregistrés dans une mémoire.

8. Procédé conforme à l'une des revendications précédentes,
**caractérisé en ce que**
les signaux de réception d'au moins deux des éléments de réception (41a-44h) sont exploités indépendamment l'un de l'autre dans au moins deux positions relatives différentes des deux objets (11, 12).

9. Procédé conforme à l'une des revendications précédentes,
**caractérisé en ce que**
les signaux de réception des éléments de réception (41a-44h) sont amplifiés et exploités conjointement dans un mode de mesure, et en particulier leur moyenne est établie.

10. Procédé conforme à l'une des revendications précédentes,
**caractérisé en ce que**
des éléments de réception individuels (41a-44h) ou des groupes d'éléments de réception (41, 42, 43, 44) peuvent être désactivés.

11. Procédé conforme à l'une des revendications précédentes,
**caractérisé en ce que**
le mode de surveillance peut être activé par l'intermédiaire d'une interface par une commande d'ordre supérieur ou par une commande intégrée dans le récepteur (40).

12. Dispositif de mesure de l'angle de rotation de deux objets (11, 12) mobiles en rotation l'un par rapport à l'autre comportant un émetteur (20) associé à l'un des objets, et un élément (30) agissant sur la direction de polarisation, l'émetteur (20) et l'élément (30) agissant sur la direction de polarisation tournant l'un par rapport à l'autre en fonction de l'angle de rotation, ainsi qu'un récepteur (40) mesurant l'intensité de la lumière traversant l'élément (30) agissant sur la direction de polarisation ou réfléchie par celui-ci pour produire un signal dépendant de l'angle de rotation,
**caractérisé en ce que**
le récepteur (40) comporte au moins deux groupes (41, 42, 43, 44) séparés dans l'espace et réalisés de manière similaire, comprenant chacun au moins deux éléments de réception (41a-44h), chaque élément de réception (41a-44h) étant réalisé pour permettre une détection sensible à la polarisation, les plans de polarisation des éléments de réception (41a-44h) de chaque groupe (41, 42, 43, 44) étant tournés les uns par rapport aux autres, des moyens étant prévus pour exploiter indépendamment l'un de l'autre, les signaux de réception d'au moins deux des éléments de réception (41a-44h) dans un mode de surveillance et des moyens étant prévus pour comparer les signaux de réception d'au moins deux des éléments de réception (41a-44h) ayant les mêmes plans de polarisation dans le mode de surveillance.

13. Dispositif de mesure de l'angle de rotation de deux objets (11, 12) mobiles en rotation l'un par rapport à l'autre, comportant un émetteur (20) associé à l'un des objets, et un élément (30) agissant sur la direction de polarisation, l'émetteur (20) et l'élément (30) agissant sur la direction de polarisation tournant l'un par rapport à l'autre en fonction de l'angle de rotation, ainsi qu'un récepteur (40) mesurant l'intensité de la lumière traversant l'élément (30) agissant sur la direction de polarisation ou réfléchie par celui-ci pour produire un signal dépendant de l'angle de rotation,
**caractérisé en ce que**
le récepteur (40) comporte au moins deux groupes (41, 42, 43, 44) séparés dans l'espace et réalisés de manière similaire, comprenant chacun au moins deux éléments de réception (41a-44h), chaque élément de réception (41a-44h) étant réalisé pour permettre une détection sensible à la polarisation, les plans de polarisation des éléments de réception (41a-44h) de chaque groupe (41, 42, 43, 44) étant respectivement tournés les uns par rapport aux autres, les signaux de réception d'au moins deux des éléments de réception (41a-44h) pouvant être exploités indépendamment les uns des autres dans un mode de surveillance, des moyens étant prévus pour transformer par calcul en un angle les signaux de réception d'au moins deux des éléments de réception (41a-41h) dans le mode de surveillance, et comparer les angles calculés avec l'angle pouvant être calculé à partir des signaux de réception d'au moins deux autres éléments de réception ayant le même décalage angulaire relatif des plans de polarisation.

14. Dispositif de mesure de l'angle de rotation de deux objets (11, 12) mobiles en rotation l'un par rapport à l'autre comportant un émetteur (20) associé à l'un des objets, et un élément (30) agissant sur la direction de polarisation, l'émetteur (20) et l'élément (30) agissant sur la direction de polarisation tournant l'un par rapport à l'autre en fonction de l'angle de rotation, ainsi qu'un récepteur (40) mesurant l'intensité de la lumière traversant l'élément agissant sur la direction de polarisation ou réfléchie par celui-ci pour produire un signal dépendant de l'angle de rotation,
**caractérisé en ce que**
le récepteur (40) comporte au moins deux groupes (41, 42, 43, 44) séparés dans l'espace et réalisés de manière similaire, comprenant chacun au moins deux éléments de réception (41a-44h), chaque élément de réception (41a-44h) étant réalisé pour permettre une détection sensible à la polarisation, les plans de polarisation des éléments de réception (41a-44h) de chaque groupe (41, 42, 43, 44) étant respectivement tournés les uns par rapport aux autres, des moyens étant prévus pour exploiter indépendamment l'un de l'autre les signaux de réception d'au moins deux des éléments de réception (41a-44h) dans un mode de surveillance, des moyens étant prévus pour déterminer, dans le mode de surveillance, le contraste d'un élément de réception individuel (41a-44h) ou le contraste d'un ou de plusieurs groupe(s) (41, 42, 43, 44) d'éléments de réception, et le comparer soit à un contraste de consigne enregistré d'un élément de réception (41a-44h) individuel ou d'un ou de plusieurs groupe(s) (41, 42, 43, 44) d'éléments de réception, soit au contraste d'un autre élément de réception (41a-44h) individuel ou au contraste d'un autre ou de plusieurs autres groupe(s) (41, 42, 43, 44) d'éléments de réception.

15. Dispositif conforme à la revendication 12, 13 ou 14,
**caractérisé en ce que**
les plans de polarisation des éléments de réception (41a-44h) de chaque groupe (41, 42, 43, 44) sont respectivement tournés de 180° /n les uns par rapport aux autres, n étant le nombre d'éléments de réception du groupe.

16. Dispositif conforme à l'une des revendications 12 à 15,
**caractérisé en ce que**
l'émetteur (20) émet de la lumière pulsée ou peut être alimenté par une fréquence de modulation.

17. Dispositif conforme à l'une des revendications 12 à 16,
**caractérisé en ce qu'**
il comprend une unité de sortie pouvant délivrer un signal d'avertissement optique ou acoustique ou autre.
